# EUROPEAN PATENT SPECIFICATION

(11) **EP 3 925 811 B1**
(45) Date of publication and mention of the grant of the patent: **31.12.2025**
(21) Application number: 21180440.6
(22) Date of filing: 18.06.2021
(51) Int. Cl.: B60K 17/04, F16H 3/68, F16H 3/24, F16H 3/64

(54) **WHEEL HUB FOR AN AXLE OF A VEHICLE COMPRISING AN IMPROVED INTEGRATED REDUCTION SYSTEM**
RADNABE FÜR EINE FAHRZEUGACHSE MIT EINEM VERBESSERTEN INTEGRIERTEN UNTERSETZUNGSSYSTEM
MOYEU DE ROUE POUR UN ESSIEU DE VÉHICULE COMPRENANT UN SYSTÈME DE RÉDUCTION INTÉGRÉ AMÉLIORÉ

(30) Priority: 18.06.2020 IT 202000014653
(43) Date of publication of application: 22.12.2021
(73) Proprietor: IVECO S.P.A., 10156 Torino (IT)
(72) Inventor: PEREIRA DE LEMOS, José Francivaldo, SETE LAGOAS MG (BR)
(74) Representative: Studio Torta S.p.A.

(56) References cited:
- EP-A1- 3 437 913
- EP-B1- 3 437 913
- DE-A1- 1 755 046
- US-A1- 2002 187 870
- US-A1- 2008 029 992
- US-A1- 2020 039 348

## Description

### TECHNICAL FIELD

The invention relates to a wheel hub for an axle of a vehicle, in particular a wheel hub for an axle of a heavy vehicle comprising a reduction system integrated in the hub.

### KNOWN STATE OF THE ART

As it is known, in a wheel vehicle provided with at least one internal combustion engine, reducing the torque coming from the driving shaft relative to the axles of the vehicle is essential.

As it is further known, vehicles are normally provided with a differential gear assembly, which is configured to differentiate the torque coming from the driving shaft between a pair of axle shafts of the axle, due to known reasons of dynamics while driving the vehicle.

The aforementioned torque reduction is normally carried out by means of known gearbox devices arranged between the driving shaft and the aforesaid differential gear assembly.

However, in case of heavy vehicles, these reduction ratios are insufficient, in terms of number, to be able to provide a suitable reduction ratio between the torque of the driving shaft and the torque delivered to the wheels of the axle in the different load conditions.

Indeed, it is clear that a heavy vehicle, such as a truck, has to bear a significant weight difference between the unloaded condition and the maximum load condition and, hence, the highest gears are not necessarily the most suited ones for the unloaded condition of the vehicle.

Therefore, there is a strong need for a reduction system for an axle of a vehicle, which can solve the problems discussed above.

Examples of known wheel hubs provided with a reduction unit are disclosed in publication US2020039348 A1, US2008029992 A1, US2002187870 A1, DE1755046 A1 or EP3437913 A1.

The object of the invention is to fulfil the aforementioned needs in an optimized and economic fashion.

### SUMMARY OF THE INVENTION

The aforesaid object is reached by a wheel hub for an axle of a vehicle according to claim 1 and an axle according to claim 7. Preferred embodiments of the present invention are laid down in the dependent claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- figure 1 is a schematic, longitudinal section view of a wheel hub of an axle comprising a reduction system according to an embodiment not making part of the present invention but useful for its understanding in a first operating condition;
- figure 2 is a schematic, longitudinal section view of the axle wheel hub of figure 1 in a second operating condition;
- figure 3 is a schematic, longitudinal section view of a wheel hub of an axle comprising a reduction system according to an embodiment not making part of the present invention but useful for its understanding in a first operating condition;
- figure 4 is a schematic, longitudinal section view of the axle wheel hub of figure 3 in a second operating condition;
- figure 5 is a schematic, longitudinal section view of a wheel hub of an axle comprising a reduction system according to an embodiment not making part of the present invention but useful for its understanding in a first operating condition;
- figure 6 is a schematic, longitudinal section view of the axle wheel hub of figure 5 in a second operating condition;

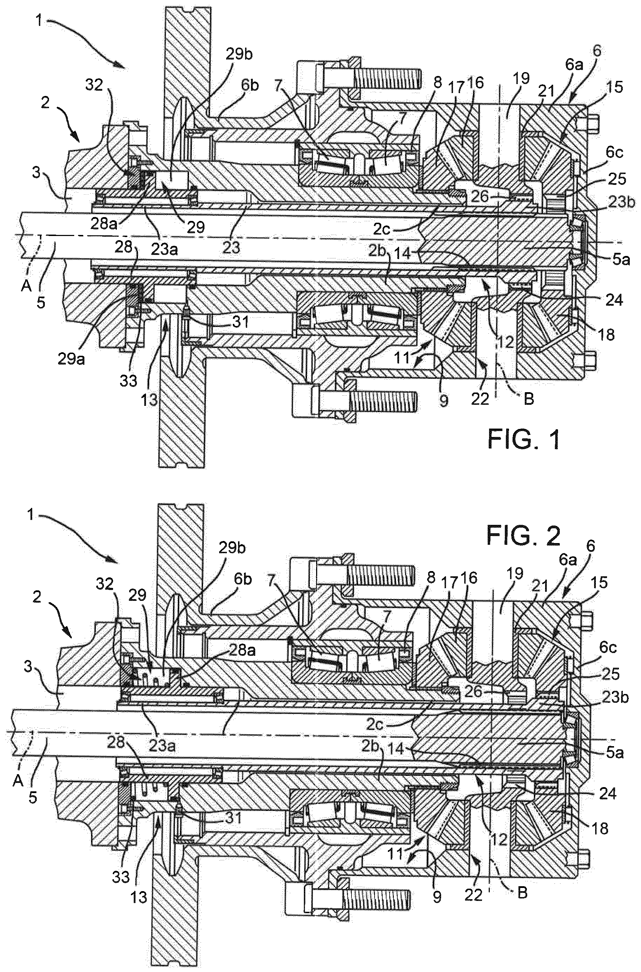

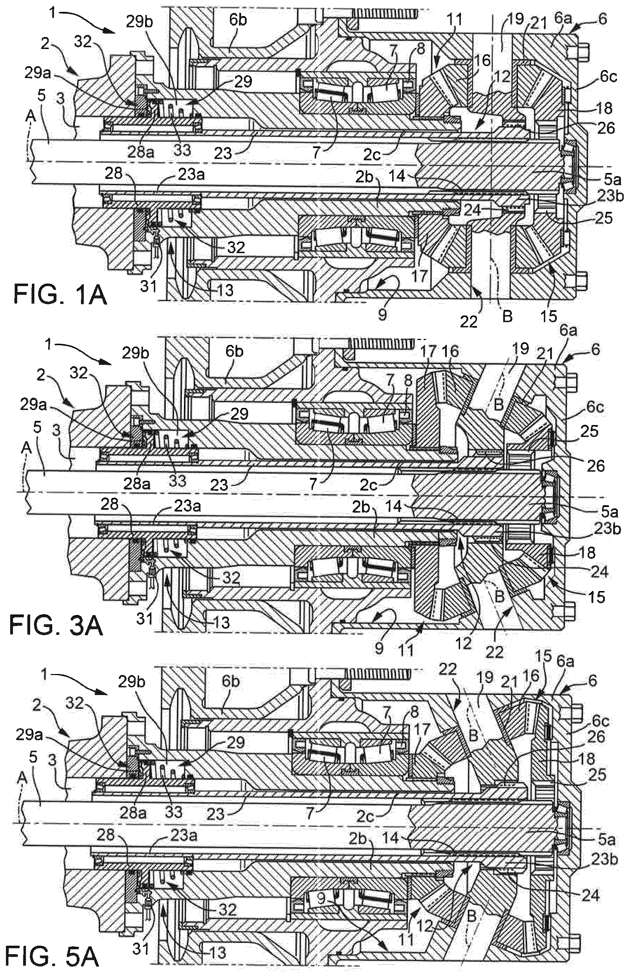

- figures 1A, 3A and 5A are respective views of alternative embodiments of the embodiments of figures 1, 3 and 5;

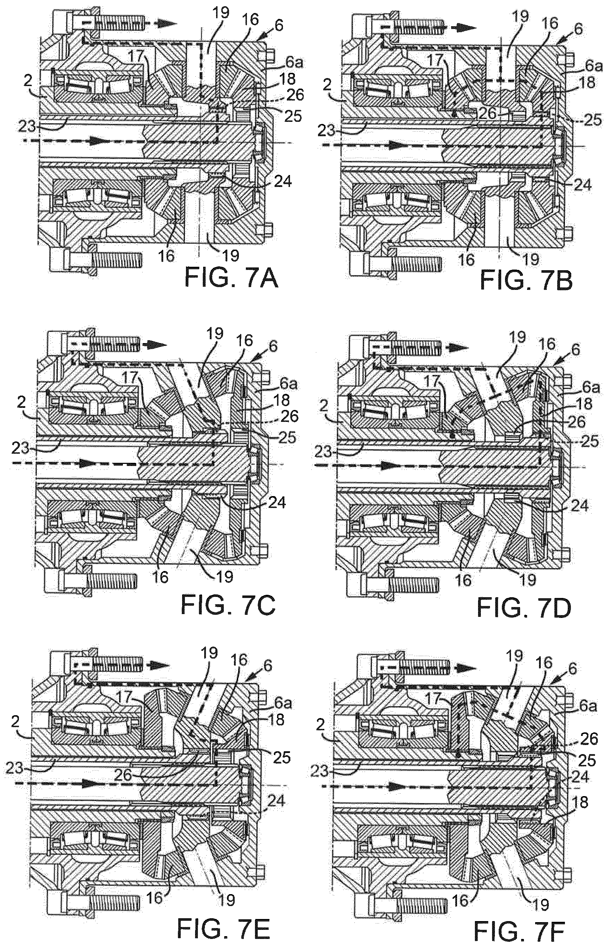

- figures 7A to 7F show, in a simplified manner and with the aid of dedicated lines, the passage of torque in the axle wheel hub of figures 1 and 2, 3 and 4, 5 and 6, respectively;

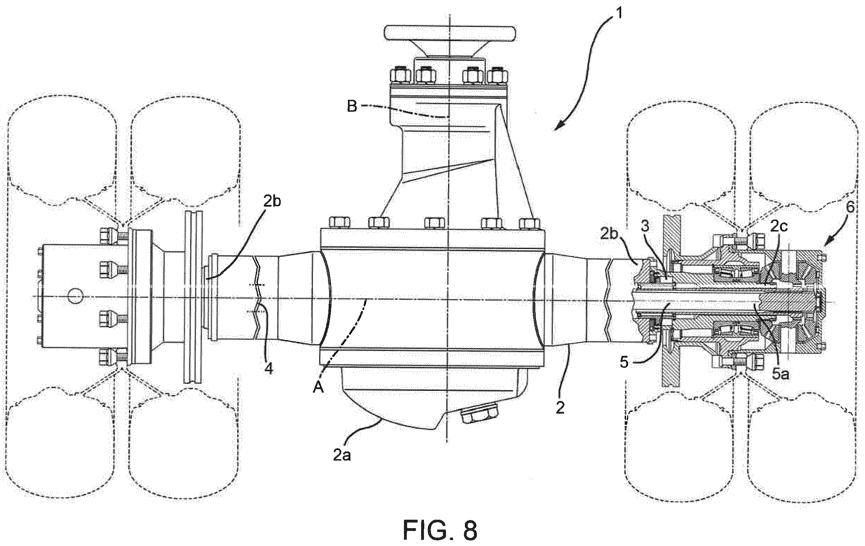

- figure 8 shows a partially sectional view of an axle comprising a wheel hub according to the embodiments of figures 1 to 6;

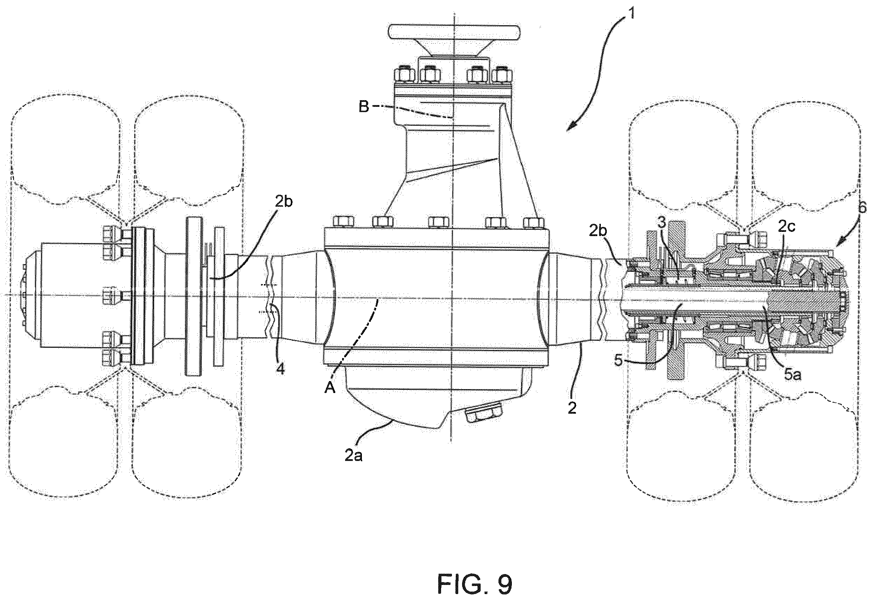

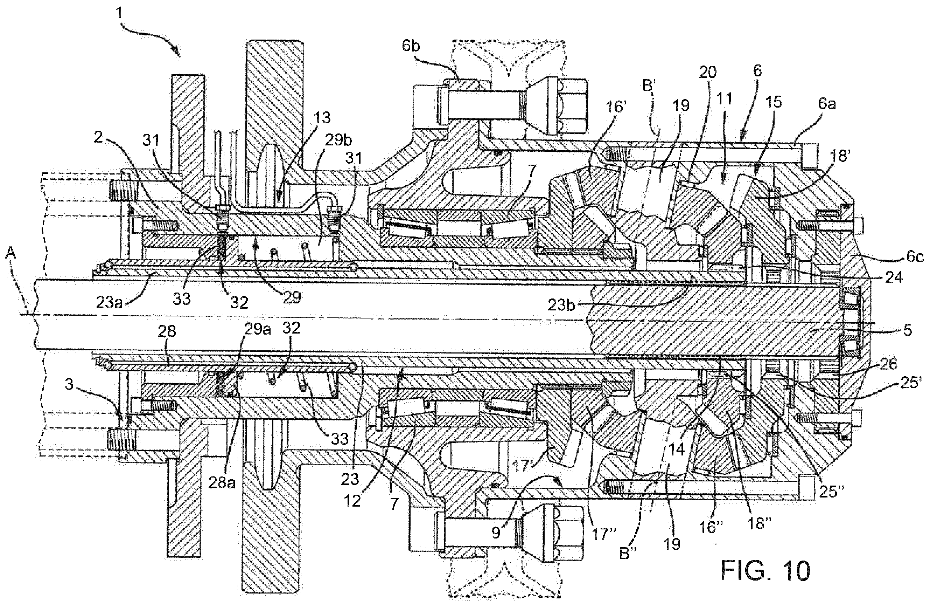

- figure 9 shows a partially sectional view of an axle comprising a wheel hub according to the embodiments of figures 10 to 14;
- figure 10 is a schematic, longitudinal section view of a wheel hub of an axle comprising a reduction system according to the present invention in a first operating condition;

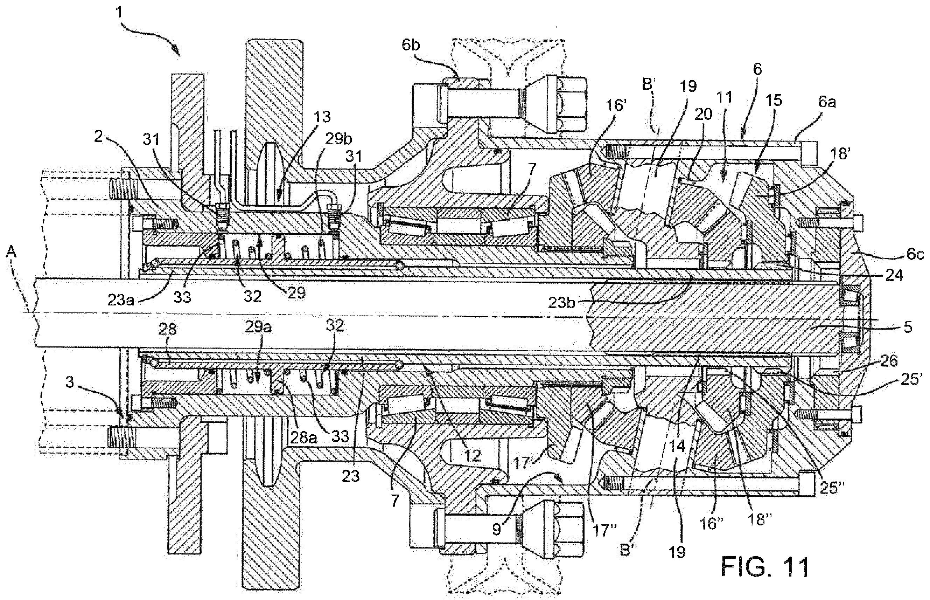

- figure 11 is a schematic, longitudinal section view of the axle wheel hub of figure 10 in a second operating condition;

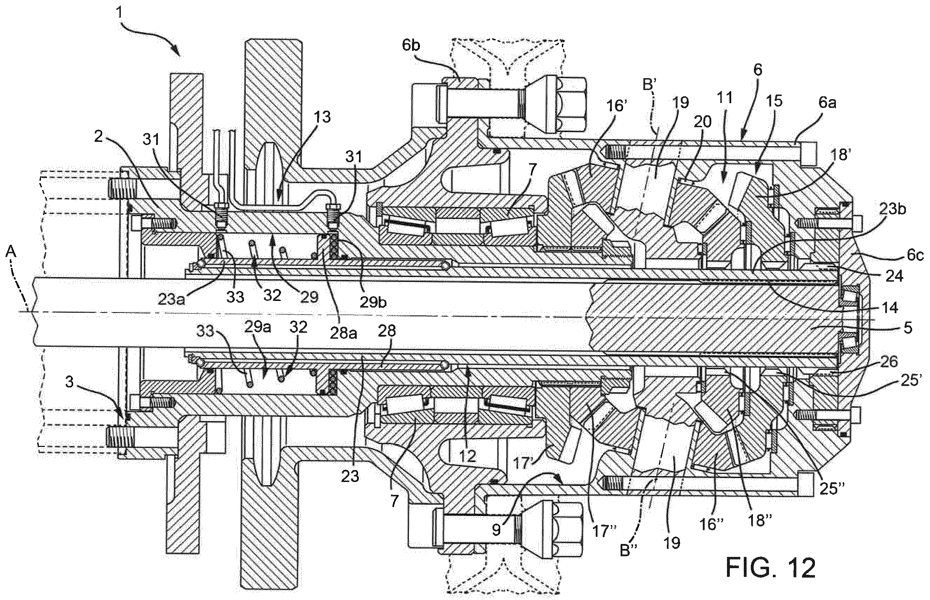

- figure 12 is a schematic, longitudinal section view of the axle wheel hub of figure 10 in a third operating condition;

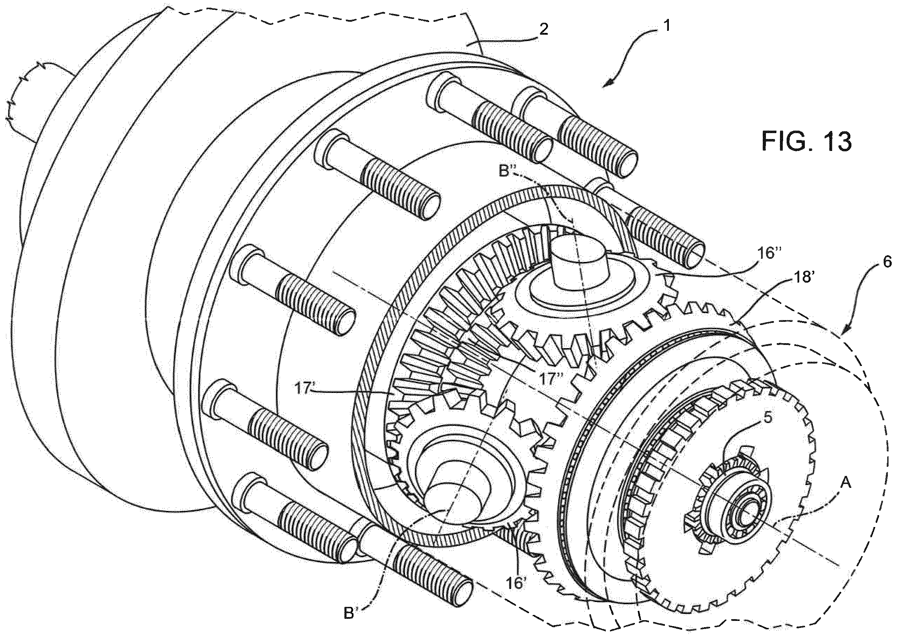

- figure 13 is a partially sectional, perspective view of the axle wheel hub of figure 10;

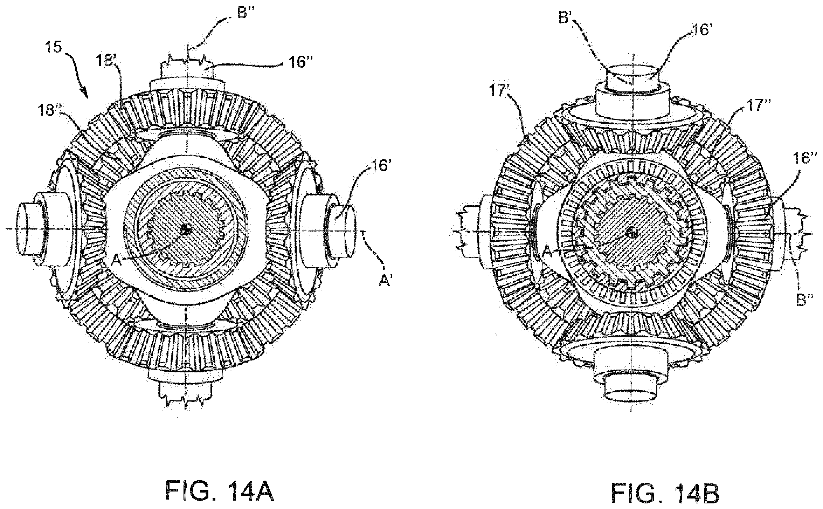

- figures 14A, 14B are respective right and left, partially sectional views of a portion of the wheel hub of figure 13; and

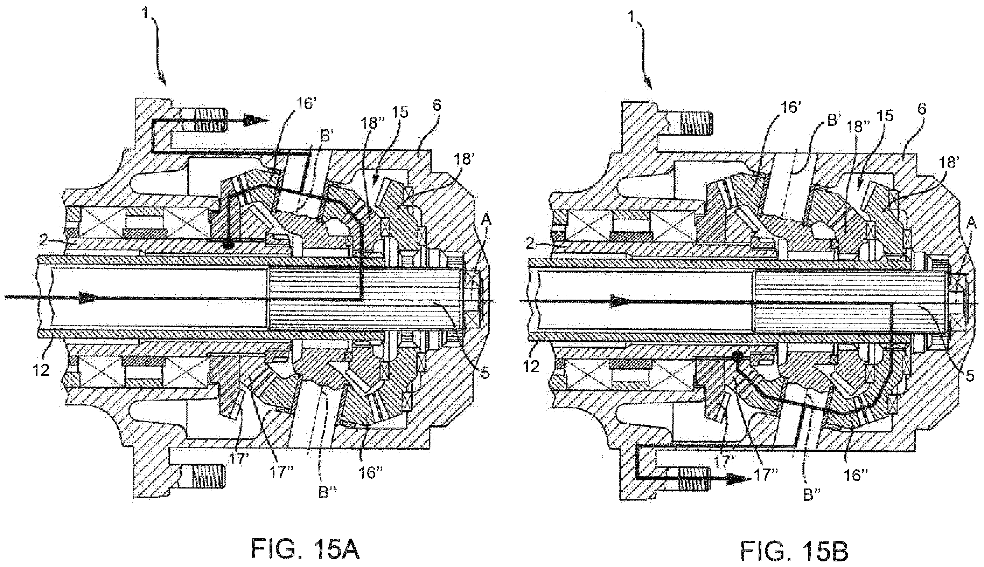

- figures 15A to 15C show, in a simplified manner and with the aid of dedicated lines, the passage of torque in the axle wheel hub of figures 10, 11 and 12, respectively.

### DETAILED DESCRIPTION OF THE INVENTION

In figures 8 and 9, number 1 indicates, as a whole, an axle of a vehicle, preferably a heavy vehicle, for example a truck, basically comprising a casing 2 defining a space 3 and a pair of axle shafts 4, 5 at least partially housed in the space 3.

The casing 2 defines a shape extending along a longitudinal axis A, which basically comprises a central portion 2a and a pair of side portions 2b extending in a continuous manner from the central portion 2a along the axis A. Advantageously, the central portion 2a has an extension, in a transverse direction relative to the axis A, which is greater than the extension of the side portions 2b in the same direction.

According to the embodiment described herein, the side portions 2b are open at the ends thanks to respective openings 2c obtained at the respective ends of the side portions 2b in order to allow the space 3 to communicate with the outside and in order to allow respective outer end portions 5a of the axle shafts 4, 5 to project out of the casing 2.

Furthermore, the axle 1 comprises a pair of wheel hubs 6, which are advantageously carried by the casing 2 so as to be free to rotate and are each configured to cooperate with a respective end portion of the axle shafts 4, 5, as described more in detail below.

The central portion 2a of the casing 2 also defines a further opening (not shown), which is configured to allow for the passage of a driving shaft, which is operatively connected to a torque source, such as an internal combustion engine (not shown).

The driving shaft is operatively connected to the axle shafts 4, 5 by means of a torque dividing unit (not shown), which is configured to divide the torque coming from the driving shaft between the axle shafts 4, 5. Said torque dividing unit can be of any type, such as a differential or a generic transmission assembly.

As to the wheel hubs 6, for the sake of simplicity reference will be made to only one of them, for example the right one, and the items of information given below also apply - in the same way - to the left wheel hub, the structure described below obviously being mirror-like relative to a longitudinal plane B of the vehicle.

The wheel hub 6, as mentioned above, is supported in such a way that it can freely rotate relative to the casing 2, in particular it is hollow and is supported on the outside of the side portion 2b of the casing 2, coaxially to the longitudinal axis A. In the example described herein, the wheel hub 6 is supported by means of support means 7, such as a pair of conical bearings, and by means of sealing means 8, such as an O-ring.

In particular, the wheel hub 6 comprises a main portion 6a with a substantially cylindrical shape, which is carried by the casing 2, and an annular portion 6b, which is housed around the side portion 2b of the casing 2 and is carried by the main portion 6a. Advantageously, the central portion 6a and the annular portion 6b are held together by means of known threaded means and, optionally, with the aid of intermediate parts, depending on the assembly due to the type and the weight of the vehicle and, hence, not described in detail.

The cylindrical portion 6a defines, together with the side portion 2b of the casing 2, a chamber 9, which is axially delimited - along the axis A - by the opening 2c and, hence, by the support elements 7 and, on the opposite side, by an axial wall 6c that is part of the cylindrical portion 6a; said chamber 9 is radially delimited, around the axis A, by the internal surface of the main portion 6a of the wheel hub 6.

The wheel hub 6 is operatively connected to the axle shaft 5 by means of a reduction unit 11, which is housed inside the chamber 9 and is configured to connect the wheel hub 6 to the axle shaft 5 with several different transmission ratios, namely so that the speed/torque delivered to the axle shaft 5 is different from the speed/torque delivered to the wheel hub 6.

According to the embodiment of figures 1 to 8, which do not form part of the present invention, the wheel hub 6 is provided with a reduction unit 11, which allows for two different transmission ratios between the axle shaft 5 and the wheel hub 6.

In particular, the reduction unit 11 comprises a selector 12, which is coupled to the axle shaft 5 in a rotary manner and is configured to freely move on it along the axis A due to the action of actuator means 13, which are described below. The selector 12 is advantageously coupled to the axle shaft 5 by means of a grooved coupling 14, such as a splined coupling.

The reduction unit 11 further comprises a gear 15, which is configured to cooperate with the selector 12 according to a first and a second operating condition characterized by two different transmission ratios between the axle shaft 5 and the wheel hub 6.

In particular, the gear 15 is an epicyclic gear system comprising a plurality of satellites 16 carried by the wheel hub 6 and a pair of gear wheels 17, 18 meshing with the satellites 16. Preferably, the gear 15 comprises four satellites carried by the wheel hub 6 in a cross shape.

More in detail, a first gear wheel 17 is carried - in an integral manner - by the end of the casing 2 close to the opening 2c coaxially to the axis A, whereas a second gear wheel 18 is carried - so that it can freely rotate - by the main portion 6a of the wheel hub 6. In particular, said second gear wheel 18 is supported - so that it is axially free to rotate around the axis A - on the axial wall 6c of the main portion 6a.

Each satellite 16 is carried by the wheel hub 6 by means of respective pins 19, around which each satellite can rotate 16, for example by means of a bushing 21. The pins 19 are fixed to the wheel hub 6 in an integral manner and are fixed in respective openings 22, for example by means of threaded elements/plugs or any other type of known fixing solution.

Each pin 19 extends along an axis B, which is incident relative to the axis A of the axle 1. Consequently, the gear wheels 17, 18 mesh with the satellites 16 by means of respective bevel couplings.

In the embodiment of figures 1 and 2, the axes B of the pins 19 are perpendicular to the longitudinal axis A of the axle 1, so that the dimensions of the gear wheels 17, 18 are substantially the same.

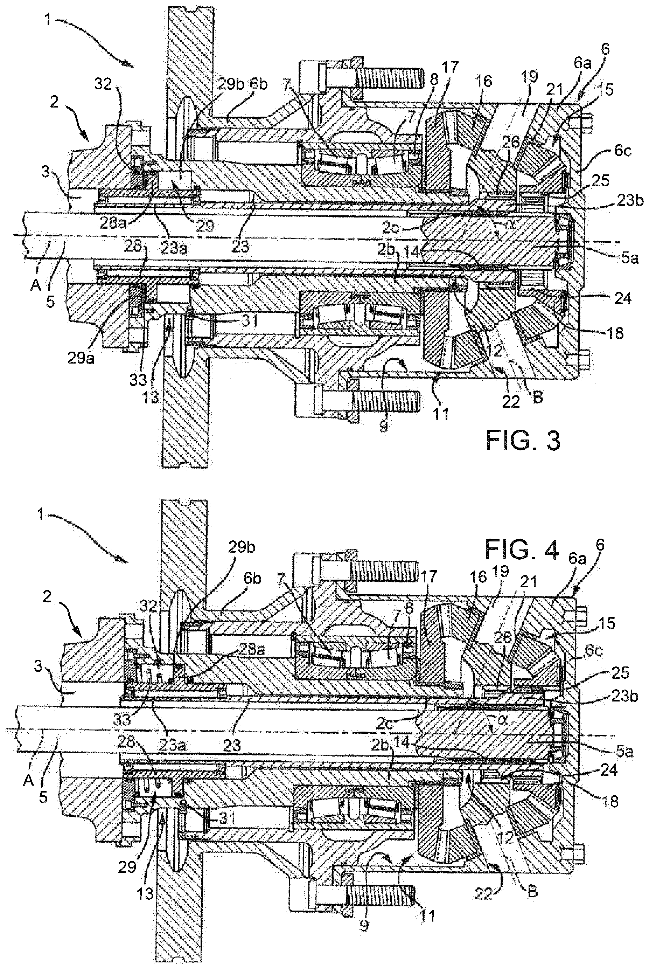

In the embodiment of figures 3 and 4, the axes B of the pins 19 are inclined relative to the longitudinal axis A of the axle 1 by an acute angle α facing the axial wall 6c of the wheel hub 6, so that the first gear wheel 17 has a greater radial extension relative to the axis A than the second gear wheel 18.

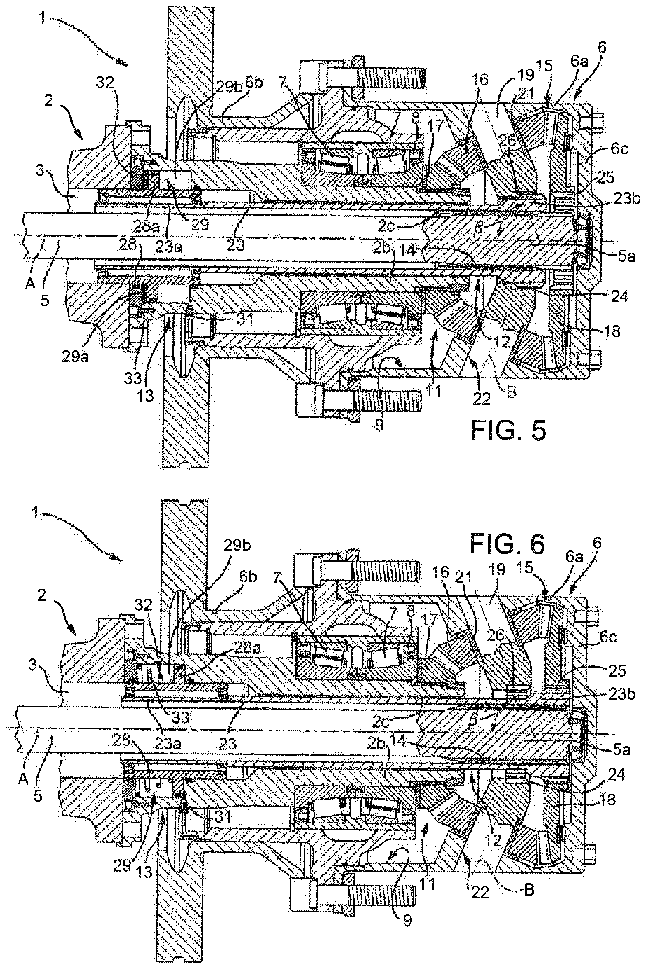

In the embodiment of figures 5 and 6, the axes B of the pins 19 are inclined relative to the longitudinal axis A of the axle 1 by an acute angle β facing the casing 2, so that the first gear wheel 17 has a smaller radial extension relative to the axis A than the second gear wheel 18.

In each one of the embodiments described above, the selector 12 comprises a selector shaft 23, which is coaxial to the axle shaft 5 and comprises an internal end 23a, which extends inside the space 3 of the casing 2, and an external end 23b, which extends inside the space 9 defined between the wheel hub 6 and the casing 2.

Said selector shaft 23b defines a toothing 24 close to the external end 23b, which is configured to cooperate with respective toothings 25, 26, which are integral to the second gear wheel 18 and to the pins 19, respectively.

More in detail, the toothings 24, 25, 26 are toothings with straight teeth, which can mesh with one another based on the sliding of the selector shaft 23 along the axis A.

The toothing 25 carried by the second gear wheel is advantageously defined on the internal surface of the hub thereof, whereas the toothing 26 is defined in an inner portion of the pins 19 opposite the portion fixed to the wheel hub 6.

In a first operating condition, which is shown in figures 1, 3 and 5, the selector shaft 23 is arranged in such a way that the toothing 24 meshes with the toothing 26 of the pins 19 and, hence, the torque is transmitted from the axle shaft 5 to the wheel hub 6 through a first transmission ratio, whereas, in a second operating condition, which is shown in figures 2, 4 and 6, the selector shaft 23 is arranged in such a way that the toothing 24 meshes with the toothing 25 of the second gear wheel 18 and, hence, the torque is transmitted from the axle shaft 5 through the gear 12, hence with a second transmission ratio, which is different from the first one.

The selector shaft 12 is caused to move between the first and the second operating condition by actuator means 13, which, in the embodiment shown herein, advantageously are pneumatic actuator means.

In particular, the actuator means comprise a sleeve 28, which is carried so that it can freely rotate, but is coupled to the translation of the selector shaft 23. The sleeve is arranged on the inside of the space 3 defined by the casing 2 and defines a flange 28a radially extending relative to the axis A in a radial seat 29 defined on the inside of the casing 2.

The sleeve 28 is sized in such a way that its external surface is contact, in a sliding manner, with an internal surface of the casing 2, so that, when the sleeve 28 moves along the axis A, the radial seat 29 is sealed in a fluid-thigh manner relative to the space 3. To this aim, known rotary seals can be provided, which are not described for the sake of brevity.

Similarly, the flange 28a is sized in such a way that its external surface is contact, in a sliding manner, with an internal surface of the radial seat 29, so that, when the sleeve 28 moves along the axis A, the flange 28a divides the radial seat 29 into two portions 29a, 29b, which are sealed in a fluid-thigh manner relative to one another.

The actuator means 13 described above further comprise valve means 31, which are configured to selectively introduce compressed air into the portion 29b of the radial seat 29 or to allow it to flow out, as shown in figures 1 to 6.

The actuator means 13 described above also comprise elastic means 32, which are housed in the opposite portion 29a of the radial seat 29 comprising the valve means 31 and are configured to exert a force upon the flange 28a and, hence, upon the sleeve 28 and, consequently, upon the selector shaft 23, so that it is held in its second operating position.

Advantageously, these elastic means comprise a helical spring 33 and, more advantageously, the helical spring 33 has a radial reduction with every loop so that, when it is compressed, each turn can radially be housed within the previous one so that, when it is compressed, the helical spring 33 axially has the thickness of one single turn, namely of the wire of the spring.

According to figures 1A, 3A and 5A, the elastic means 32 and the valve means 31 can switch places relative to the flange 28a. However, the operation of these embodiments is similar to the one described hereinafter and, therefore, they will not be described in detail.

The operation of the embodiments described above will now be explained with reference to figures 7A-7F.

Figures 7A-7B show the operating conditions of figures 1 and 2. In the condition of figure 7A, which corresponds to figure 1, the valve means 31 are controlled so as to introduce air into the portion 29b of the radial seat 29. In this way, the pressure of the air in said portion 29b acts upon the flange 28a, hence moving the sleeve 28 against the force exerted by the elastic means 32. The latter get compressed and, in the particular case described herein, take up a minimum space, since each turn of the spring 33 is radially enclosed within the outer one. In this position, the shaft 23 is arranged so that the toothing 24 meshes with the toothing 26 of the pins 19 and, hence, the torque is transmitted from the axle shaft 5 to the shaft 23 and, hence, directly to the wheel hub 6 through the transmission ratio defined by the toothings 24 and 26.

A similar operation, even though the forces involved change because of the different arrangement of the pins 19, is present in the embodiment of figure 3, which is schematically shown in figure 7C, or in the embodiment of figure 5, which is schematically shown in figure 7E. Since the operation is similar, it will not be repeated for the sake of brevity.

In the condition of figure 7B, which corresponds to figure 2, the valve means 31 can be controlled so as to let the air present in the portion 29b out of the radial seat 29. In this way, the force exerted by the elastic means 32 against the flange 28a of the sleeve 28 has no resistance to the movement due to the air under pressure and moves the shaft 2 so that the toothing 24 meshes with the toothing 25 of the wheel hub of the second gear wheel 18. In this configuration, the torque is transmitted from the axle shaft 5 to the shaft 23 and to the satellites 16 through the transmission ratio defined by the toothings 24 and 25. The latter rotate around the respective pin and around the axis A between the toothings of the first and of the second gear wheel 17, 18, thus causing the rotation of the wheel hub 6 with a further transmission ratio.

A similar operation, even though the forces involved change because of the different arrangement of the pins 19, is present in the embodiment of figure 4, which is schematically shown in figure 7D, or in the embodiment of figure 6, which is schematically shown in figure 7F. Since the operation is similar, it will not be repeated for the sake of brevity.

According the invention, i.e. to the embodiment of figures 9 to 15, the wheel hub 6 is provided with a reduction unit 11, which allows for three different transmission ratios between the axle shaft 5 and the wheel hub 6.

In particular, the reduction unit 11 comprises a selector 12, which is coupled to the axle shaft 5 in a rotary manner and is configured to freely move on it along the axis A due to the action of actuator means 13, which are described below. The selector 12 is advantageously coupled to the axle shaft 5 by means of a grooved coupling 14, such as a splined coupling.

The reduction unit 11 further comprises a gear 15, which is configured to cooperate with the selector 12 according to a first, a second and a third operating condition characterized by three different transmission ratios between the axle shaft 5 and the wheel hub 6.

In particular, the gear 15 is an epicyclic gear system comprising a first and a second pair of satellites 16', 16", which are carried by the wheel hub 6, as well as a first pair of gear wheels 17', 17'' and a second pair of gear wheels 18', 18'' meshing with a first and a second pair of satellites 16', 16" as described below. Preferably, the four satellites 16', 16" are carried in a cross-like manner so that the satellites 16' of the first pair of satellites rotating relative to a first axis B' of theirs are angularly alternated with the satellites 16" of the second pair of satellites rotating relative to a second axis B'' of theirs.

Each satellite 16', 16" of the aforesaid pairs of satellites is carried by the wheel hub 6 by means of respective pins 19, around which each satellite 16', 16" can rotate, for example by means of relative supports, such as a roller bushing 20. The pins 19 are fixed to the wheel hub 6 in an integral manner and are fixed in respective openings 22, for example by means of threaded elements/plugs or any other type of known fixing solution.

Each pin 19 extends along the respective axis B', B". Advantageously, both axes are incident relative to the axis A and, preferably, are parallel to one another.

Consequently, the gear wheels 17', 17", 18', 18'' mesh with the respective satellites 16', 16" by means of respective bevel couplings.

More in detail, the first pair of gear wheels 17', 17" comprises a first gear wheel 17' and a second gear wheel 17", both carried - in an integral manner - by the end of the casing 2 close to the opening 2c coaxially to the axis A. Advantageously, the first gear wheel 17' has a greater primitive diameter than the second gear wheel 17" and is carried is such a way that it is axially farther from the opening 2c of the casing 2.

As to the second pair of gear wheels 18', 18", it comprises a first gear wheel 18' and a second gear wheel 18", both carried - so that they can freely rotate - by the main portion 6a of the hub 6. Advantageously, the first gear wheel 18' has a greater primitive diameter than the second gear wheel 18'' and is carried so that it can freely rotate in contact with the axial wall 6c of the main portion 6a of the hub 6, whereas the second gear wheel 18" is supported so that it can freely rotate in contact with the first gear wheel 18'.

As more clearly visible in figures 13 and 14, the satellites 16' mesh between the first gear wheel of the first pair of gear wheels 17', 17" integral to the casing 2 and with the second gear wheel of the second pair of gear wheels 18', 18'' carried by the wheel hub 6 so that they can freely rotate, whereas the satellites 16" mesh between the first gear wheel of the second pair of gear wheels 18', 18" carried by the wheel hub 6 so that they can freely rotate and the second gear wheel of the first pair of gear wheels 17', 17" carried so that they are integral to the casing 2 in their rotation.

The selector 12 comprises a selector shaft 23, which is coaxial to the axle shaft 5 and comprises an internal end 23a, which extends inside the space 3 of the casing 2, and an external end 23b, which extends inside the space 9 defined between the wheel hub 6 and the casing 2.

Said selector shaft 23b defines a toothing 24 close to the external end 23b, which is configured to cooperate with respective toothings 25', 25'', which are integral to the first and to the second gear wheel 18', 18'' of the second pair of gear wheels, respectively, and to a toothing 26 integral to the wheel hub 6.

More in detail, the toothings 24, 25', 25", 26 are toothings with straight teeth, which can mesh with one another based on the sliding of the selector shaft 23 along the axis A.

The toothing 26 is advantageously defined on the internal surface of the wheel hub 6 and, in particular, is obtained on an element that can be separated from the latter in order to ensure a correct assembly.

On the other hand, each toothing 25', 25" is defined in an internal portion of the wheel hub of the first and of the second gear wheel of the second pair of gear wheels 18', 18".

In a first operating condition, which is shown in figure 10, the selector shaft 23 is arranged so that the toothing 24 meshes with the toothing 25" of the second gear wheel 18" of the second pair of gear wheels of the gear 15.

In a second operating condition, which is shown in figure 11, the selector shaft 23 is arranged so that the toothing 24 meshes with the toothing 25' of the first gear wheel 18' of the second pair of gear wheels of the gear 15.

In a third operating condition, which is shown in figure 12, the selector shaft 23 is arranged so that the toothing 24 meshes with the toothing 26 integral to the wheel hub 26.

The three operating conditions define three transmission ratios that are different from one another because of the different ratios between the toothings respectively meshing with one another.

The selector shaft 12 is caused to move between the first, the second and the third operating condition by actuator means 13, which, in the embodiment shown herein, advantageously are pneumatic actuator means.

In particular, the actuator means comprise a sleeve 28, which is carried so that it can freely rotate, but is coupled to the translation of the selector shaft 23. The sleeve is arranged on the inside of the space 3 defined by the casing 2 and defines a flange 28a radially extending relative to the axis A in a radial seat 29 defined on the inside of the casing 2.

The sleeve 28 is sized in such a way that its external surface is contact, in a sliding manner, with an internal surface of the casing 2, so that, when the sleeve 28 moves along the axis A, the radial seat 29 is sealed in a fluid-thigh manner relative to the space 3. To this aim, known rotary seals can be provided, which are not described for the sake of brevity.

Similarly, the flange 28a is sized in such a way that its external surface is contact, in a sliding manner, with an internal surface of the radial seat 29, so that, when the sleeve 28 moves along the axis A, the flange 28a divides the radial seat 29 into two portions 29a, 29b, which are sealed in a fluid-thigh manner relative to one another.

The actuator means 13 described above further comprise valve means 31, which are configured to selectively introduce compressed air into the portions 29a, 29b of the radial seat 29 or to allow it to flow out.

The actuator means 13 described above also comprise elastic means 32, which are housed in each one of the portions 29a, 29b and are each configured to exert a same force upon the flange 28a and, hence, upon the sleeve 28 and, consequently, upon the selector shaft 23, so that it is held in its second operating position.

Advantageously, these elastic means 32 comprise a helical spring 33 and, more advantageously, the helical spring 33 has a radial reduction with every loop so that, when it is compressed, each turn can radially be housed within the previous one so that, when it is compressed, the helical spring 33 axially has the thickness of one single turn, namely of its wire.

The operation of the embodiments described above will now be explained with reference to figures 15A-15C.

Figures 15A-15C show the operating conditions of figures 10, 11 and 12.

In the condition of figure 15A, which corresponds to figure 10, the valve means 31 are controlled so as to introduce air into the portion 29b of the radial seat 29 and allow it to flow out of the portion 29a. In this way, the pressure of the air in said portion 29b, together with the spring 33, acts upon the flange 28a, hence moving the sleeve 28 against the force exerted by the spring 33 housed in the portion 29a. In this portion, the spring 33 gets compressed, thus taking up a minimum space, since each turn of the spring 33 is radially enclosed within the outer one. In this position, the selector shaft 23 is arranged so that the toothing 24 meshes with the toothing 25" of the second gear wheel 18'' of the second pair of gear wheels. In this way, the torque is transmitted from the axle shaft 5 to the shaft 23 and, hence, to the satellites 16' through the transmission ratio defined by the toothings 24 and 25". The satellites 16' rotate around the respective pin and around the axis A between the toothings of the first gear wheel 17' of the first pair of gear wheels 17', 17'' and of the second gear wheel 18" of the second pair of gear wheels 18', 18", thus causing the rotation of the wheel hub 6 with a further transmission ratio.

In the condition of figure 15B, which corresponds to figure 1A, the valve means 31 can be controlled so as to let air out of both portions 29a, 29b out of the radial seat 29. In this way, the flange 28a of the sleeve 28 is held in a middle position relative to the radial seat 29, since the stiffness of the springs 33 is the same and, hence, they both exert the same force upon the flange 28a allowing it to self-centre itself in the radial seat 29. In this position, the selector shaft 23 is arranged so that the toothing 24 meshes with the toothing 25' of the first gear wheel 18' of the second pair of gear wheels. In this way, the torque is transmitted from the axle shaft 5 to the shaft 23 and to the satellites 16'' through the transmission ratio defined by the toothings 24 and 25'. The satellites 16" rotate around the respective pin and around the axis A between the toothings of the second gear wheel 17'' of the first pair of gear wheels 17', 17" and of the first gear wheel 18' of the second pair of gear wheels 18', 18", thus causing the rotation of the wheel hub 6 with a further transmission ratio.

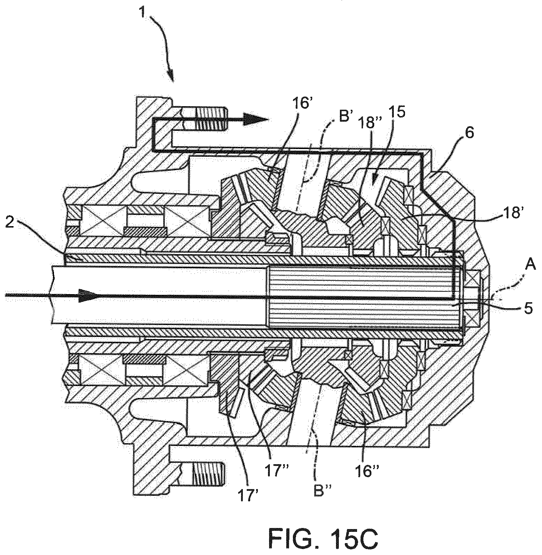

In the condition of figure 15C, which corresponds to figure 12, the valve means 31 are controlled so as to introduce air into the portion 29a of the radial seat 29 and allow it to flow out of the portion 29b. In this way, the pressure of the air in said portion 29a, together with the spring 33, acts upon the flange 28a, hence moving the sleeve 28 against the force exerted by the spring 33 housed in the portion 29b. In this portion, the spring 33 gets compressed, thus taking up a minimum space, since each turn of the spring 33 is radially enclosed within the outer one. In this position, the selector shaft 23 is arranged so that the toothing 24 meshes with the toothing 26 integral to the wheel hub 6. In this way, the torque is transmitted from the axle shaft 5 to the shaft 23 and to the wheel hub 6 through the sole transmission ratio defined by the toothings 24 and 25".

In all embodiments described above, the wheel hub 6 and the axle 1 further comprise several functional elements, such as anti-dust rings, spacers, o-rings, threaded elements, locking rings, splines, bearings or other known elements configured to allow for a correct assembly and operation of the structure schematically disclosed above, which are not discussed in the detail for the sake of brevity.

Similarly, the actuator means 13 - in the case described herein, pneumatic actuator means - can clearly be operated in an electronic manner through an electronic unit, which is configured to receive a request for a variation of the transmission ratio in the wheel hub 6 and to move the selector 12 accordingly. In the case described herein, the electronic unit needs to control the sole valve means 31 in order to adjust the movement of the selector 12.

Owing to the above, the advantages of a wheel hub for an axle of a vehicle comprising an integrated reduction system according to the invention are evident. Thanks to this system, a reduction system is provided, which is integrated in a wheel hub, is versatile, compact and economic as well as easy to be mounted and subjected to maintenance compared to known systems.

Thanks to the additional reduction system and to the reduction range that can be optimized depending on the type and size of the vehicle, fuel consumptions as well as pollutant emissions can be reduced.

In particular, the use of a bevel gearing integrated in the wheel hub allows manufacturers to obtain high transmission ratios through a sturdy gear, which is suited for the large loads of an axle of a heavy vehicle.

The use of a double gear of the type described above in its embodiment of figure 9 and following figures allows manufacturers to obtain three different transmission ratios in a very small space and with an extremely sturdy system.

Finally, the wheel hub for an axle of a vehicle comprising an integrated reduction system according to the invention can be subjected to changes and variants, which, though, do not go beyond the scope of protection set forth in the appended claims.

Obviously, as mentioned above, the casing 2 and the wheel hub 6 can have different shapes and consist of more and different pieces.

In addition, the gears described above could change and there could be elements that are not described herein, but are known when dealing with the assembly of an axle according to the invention.

Clearly, the description above relates to an air actuation, which is deemed to be the most effective and economic one, however the use of equivalent actuator means should not be excluded, said equivalent actuator means being, for example, electromagnetic, mechanical or fluid actuator means, which are configured to move the sleeve 28 or directly the selector 12 instead of the air pressing force described herein.

## Claims

1. Wheel hub (6) for an axle (1) of a vehicle comprising:
- a hollow portion (6a) carried rotationally free on a casing (2) of said axle (1) around a longitudinal axis (A) of the latter, said portion (6a) defining a chamber (9) between an internal wall and an end portion (2b) of said casing (2),
- a reduction unit (11) housed inside said chamber (9) and configured to vary the torque transmitted by an axle shaft (4, 5) of said axle (1) and said wheel hub (6), said reduction unit (11) comprising a gear train (15),
- a selector (12) rotationally coupled to said axle shaft (4, 5) of said axle (1) and free to move on it along said axis (A),
- actuator means (13) configured to control the position of said selector (12) along said longitudinal axis (A),
said gear train (15) comprising at least a first gear wheel (17, 17', 17") integral to said casing (2) and at least a second gear wheel (18, 18', 18") carried rotationally free with respect to said axis (A) from said portion (6a) and a plurality of satellites (16, 16', 16") carried by respective pins (19) fixed to said portion (6a), said satellites (16, 16', 16") meshing with said first and
second gear wheels (17, 17', 17", 18, 18', 18") and being free to rotate around a respective axis (B) defined by the respective pin (19)
said selector (12) being configured to define a transmission ratio directly with said portion (6a) or through said second gear wheel (18, 18', 18") according to its position along said axis (A),
**characterized in that** said at least first gear wheel comprises a pair of first gear wheels (17', 17") integral to said casing (2) and a pair of second gear wheels (18', 18") carried rotationally free from said hub (6),
said plurality of satellites comprising first satellites (16') carried by pins (19) integral to said portion (6a) and rotatably free around first axes (B') of said pins (19), said first satellites (16') being meshed between a first gear wheel of the first pair of gear wheels (17', 17") and a second gear wheel of the second pair of gear wheels (18', 18") and second satellites (16") carried by pins (19) integral to said portion (6a) and rotatably free around second axes (B") of said pins (19), said second satellites (16") being meshed between a first gear wheel of the second pair of gear wheels (18', 18") and a second gear wheel of the first pair of gear wheels (17', 17"),
said selector (12) comprising a shaft (23) coaxial to said axle shaft (4, 5), said shaft (23) comprising a first end (23a) cooperating with said actuator means (13) and a second end (23b) opposite the first and defining a toothing (24), said toothing (24) selectively meshing with a toothing (26) integral to said portion (6a) of said wheel hub (6) or a toothing (25') integral to said first gear wheel (18') of said second pair of gear wheels or a toothing (25'') integral to said second gear wheel (18'') of said second pair of gear wheels according to its position along said axis (A).

2. Wheel hub according to claim 1, wherein said first and second gear wheels of said first pair of gear wheels (17', 17") and said first and second gear wheels of said second pair of gear wheels (18' , 18") face each other along said axis (A).

3. Wheel hub according to claim 1 or 2, wherein said first and second gear wheels of said second pair of gear wheels (18', 18") are supported rotationally free with respect to said axis (A) one on the other on said portion (6a) of said wheel hub (6).

4. Wheel hub according to one of claims 1 to 3, wherein said axes (B', B") of said pins (19) carrying said first and second satellites (16', 16") are parallel to each other.

5. Axle (1) for vehicle including:
- a casing (2) defining a space (3) along a longitudinal axis (A) and comprising a central portion (2a) and a pair of lateral portions (2b) connected to the central portion along said axis (A);
- a pair of axle shafts (4, 5) partially housed in said space (3) and comprising respective internal ends cooperating with a driving shaft configured to supply a driving torque to said axle shafts (4, 5);
- respective wheel hubs (6) carried rotationally free from said casing (2) on said side portions (2b) according to one of the preceding claims.

6. An axle according to claim 5 comprising a torque dividing unit between said drive shaft and said axle shafts (4,5).

7. Axle according to claim 5 or 6 wherein said actuator means (13) are radially interposed between said shaft (5) and said casing (2) with respect to said axis (A).

8. Axle according to one of claims 5 to 7, wherein said actuator means (13) comprise a sleeve (28) slidably housed with said casing (2) between an internal surface of said casing (2) and said selector (12), said sleeve (28) being coupled to the translation but rotationally free to said selector (12), said casing (2) defining a radial seat (29) in which a flange (28a) of said sleeve (28) is configured for slidingly sealing dividing said radial seat into a first and a second portions (29a, 29b), at least one of said first and a second portions (29a, 29b) comprising valve means (31) configured to introduce or release pressurized air and at least one said first and second portions (29a, 29b) comprising elastic means (32) operatively interposed between said casing (2) and said sleeve (28).

9. An axle according to claim 8, wherein said elastic means (32) comprise a helical spring (33), said helical spring (33) defining a plurality of turns whose radial extension varies between one turn and the next so that, when compressed as a pack, a coil is radially housed inside the next one and the thickness of said pack coil spring (33) is equal to its wire.

## Patentansprüche

1. Radnabe (6) für eine Achse (1) eines Fahrzeugs, umfassend:
- einen hohlen Abschnitt (6a), der frei drehbar auf einem Gehäuse (2) der Achse (1) um eine Längsachse (A) der Letzteren getragen wird, wobei der Abschnitt (6a) eine Kammer (9) zwischen einer Innenwand und einem Endabschnitt (2b) des Gehäuses (2) definiert,
- eine Untersetzungseinheit (11), die im Inneren der Kammer (9) untergebracht und konfiguriert ist, um das Drehmoment zu variieren, das von einer Achswelle (4, 5) der Achse (1) und der Radnabe (6) übertragen wird, wobei die Untersetzungseinheit (11) ein Rädergetriebe (15) umfasst,
- einen Wähler (12), der drehbar mit der Achswelle (4, 5) der Achse (1) gekoppelt ist und sich frei auf ihr entlang der Achse (A) bewegen kann,
- Betätigungsmittel (13), die konfiguriert sind, um die Position des Wählers (12) entlang der Längsachse (A) zu steuern,
wobei das Rädergetriebe (15) mindestens ein erstes Zahnrad (17, 17', 17"), das integral mit dem Gehäuse (2) ist, und mindestens ein zweites Zahnrad (18, 18', 18"), das frei drehbar in Bezug auf die Achse (A) von dem Abschnitt (6a) getragen wird, und eine Vielzahl von Satelliten (16, 16', 16"), die von jeweiligen Stiften (19) getragen werden, die an dem Abschnitt (6a) befestigt sind, umfasst, wobei die Satelliten (16, 16', 16") mit dem ersten und dem zweiten Zahnrad (17, 17', 17", 18, 18', 18") kämmen und sich frei um eine jeweilige Achse (B) drehen können, die durch den jeweiligen Stift (19) definiert ist,
wobei der Wähler (12) konfiguriert ist, um ein Übersetzungsverhältnis direkt mit dem Abschnitt (6a) oder durch das zweite Zahnrad (18, 18', 18") gemäß seiner Position entlang der Achse (A) zu definieren,
**dadurch gekennzeichnet, dass** das mindestens erste Zahnrad ein Paar erster Zahnräder (17', 17"), die integral mit dem Gehäuse (2) sind, und ein Paar zweiter Zahnräder (18', 18"), die frei drehbar von der Nabe (6) getragen werden, umfasst,
wobei die Vielzahl von Satelliten erste Satelliten (16'), die von Stiften (19) getragen werden, die integral mit dem Abschnitt (6a) sind und sich frei um erste Achsen (B') der Stifte (19) drehen können, wobei die ersten Satelliten (16') zwischen einem ersten Zahnrad des ersten Zahnradpaars (17', 17") und einem zweiten Zahnrad des zweiten Zahnradpaars (18', 18") kämmen, und zweite Satelliten (16"), die von Stiften (19) getragen werden, die integral mit dem Abschnitt (6a) sind und sich frei um zweite Achsen (B") der Stifte (19) drehen können, umfasst, wobei die zweiten Satelliten (16") zwischen einem ersten Zahnrad des zweiten Zahnradpaars (18', 18") und einem zweiten Zahnrad des ersten Zahnradpaars (17', 17") kämmen,
wobei der Wähler (12) eine Welle (23) koaxial zu der Achswelle (4, 5) umfasst, wobei die Welle (23) ein erstes Ende (23a), das mit den Betätigungsmitteln (13) zusammenwirkt, und ein zweites Ende (23b) gegenüber dem ersten umfasst und eine Verzahnung (24) definiert, wobei die Verzahnung (24) selektiv mit einer Verzahnung (26), die integral mit dem Abschnitt (6a) der Radnabe (6) ist, oder einer Verzahnung (25'), die integral mit dem ersten Zahnrad (18') des zweiten Zahnradpaars ist, oder einer Verzahnung (25"), die integral mit dem zweiten Zahnrad (18") des zweiten Zahnradpaars ist, gemäß seiner Position entlang der Achse (A) kämmt.

2. Radnabe nach Anspruch 1, wobei das erste und das zweite Zahnrad des ersten Zahnradpaars (17', 17") und das erste und das zweite Zahnrad des zweiten Zahnradpaars (18', 18") einander entlang der Achse (A) zugewandt sind.

3. Radnabe nach Anspruch 1 oder 2, wobei das erste und das zweite Zahnrad des zweiten Zahnradpaars (18', 18") frei drehbar in Bezug auf die Achse (A) eines auf dem anderen auf dem Abschnitt (6a) der Radnabe (6) getragen werden.

4. Radnabe nach einem der Ansprüche 1 bis 3, wobei die Achsen (B', B") der Stifte (19), die die ersten und zweiten Satelliten (16', 16") tragen, parallel zueinander stehen.

5. Achse (1) für ein Fahrzeug, umfassend:
- ein Gehäuse (2), das einen Raum (3) entlang einer Längsachse (A) definiert und einen mittleren Abschnitt (2a) und ein Paar seitlicher Abschnitte (2b), die mit dem mittleren Abschnitt entlang der Achse (A) verbunden sind, umfasst;
- ein Paar Achswellen (4, 5), die teilweise in dem Raum (3) untergebracht sind und jeweilige innere Enden umfassen, die mit einer Antriebswelle zusammenwirken, die konfiguriert ist, um den Achswellen (4, 5) ein Antriebsdrehmoment zuzuführen;
- jeweilige Radnaben (6), die frei drehbar von dem Gehäuse (2) auf den Seitenabschnitten (2b) getragen werden, nach einem der vorhergehenden Ansprüche.

6. Achse nach Anspruch 5, umfassend eine Drehmomentteilungseinheit zwischen der Antriebswelle und den Achswellen (4, 5).

7. Achse nach Anspruch 5 oder 6, wobei die Betätigungsmittel (13) radial zwischen der Welle (5) und dem Gehäuse (2) in Bezug auf die Achse (A) angeordnet sind.

8. Achse nach einem der Ansprüche 5 bis 7, wobei die Betätigungsmittel (13) eine Hülse (28) umfassen, die verschiebbar mit dem Gehäuse (2) zwischen einer Innenfläche des Gehäuses (2) und dem Wähler (12) untergebracht ist, wobei die Hülse (28) mit dem Wähler (12) translatorisch gekoppelt, aber frei drehbar ist, wobei das Gehäuse (2) einen radialen Sitz (29) definiert, in dem ein Flansch (28a) der Hülse (28) konfiguriert ist, um den radialen Sitz gleitend abdichtend in einen ersten und einen zweiten Abschnitt (29a, 29b) zu teilen, wobei mindestens einer von dem ersten und dem zweiten Abschnitt (29a, 29b) Ventilmittel (31) umfasst, die konfiguriert sind, um Druckluft einzuführen oder freizusetzen, und mindestens einer von dem ersten und dem zweiten Abschnitt (29a, 29b) elastische Mittel (32) umfasst, die operativ zwischen dem Gehäuse (2) und der Hülse (28) angeordnet sind.

9. Achse nach Anspruch 8, wobei die elastischen Mittel (32) eine Schraubenfeder (33) umfassen, wobei die Schraubenfeder (33) eine Vielzahl von Windungen definiert, deren radiale Ausdehnung zwischen einer Windung und der nächsten variiert, sodass, wenn sie als ein Paket komprimiert wird, eine Spule radial innerhalb der nächsten untergebracht ist und die Dicke der Paketschraubenfeder (33) gleich ihrem Draht ist.

## Revendications

1. Moyeu de roue (6) pour un essieu (1) d'un véhicule comprenant :
- une portion creuse (6a) portée libre en rotation sur un carter (2) dudit essieu (1) autour d'un axe (A) longitudinal de ce dernier, ladite portion (6a) définissant une chambre (9) entre une paroi interne et une portion d'extrémité (2b) dudit carter (2),
- une unité de réduction (11) logée à l'intérieur de ladite chambre (9) et configurée pour faire varier le couple transmis par un arbre d'essieu (4, 5) dudit essieu (1) et dudit moyeu de roue (6), ladite unité de réduction (11) comprenant un train d'engrenages (15),
- un sélecteur (12) couplé en rotation audit arbre d'essieu (4, 5) dudit essieu (1) et libre de se déplacer sur celui-ci le long dudit axe (A),
- des moyens d'actionnement (13) configurés pour commander la position dudit sélecteur (12) le long dudit axe (A) longitudinal,
ledit train d'engrenages (15) comprenant au moins une première roue dentée (17, 17', 17") solidaire dudit carter (2) et au moins une deuxième roue dentée (18, 18', 18") portée en rotation libre par rapport audit axe (A) à partir de ladite portion (6a) et une pluralité de satellites (16, 16', 16'') portés par des broches (19) respectives fixées à ladite portion (6a), lesdits satellites (16, 16', 16'') s'engrenant avec lesdites première et
deuxième roues dentées (17, 17', 17", 18, 18', 18") et étant libres de tourner autour d'un axe (B) respectif défini par la broche (19) respective
ledit sélecteur (12) étant configuré pour définir un rapport de transmission directement avec ladite portion (6a) ou à travers ladite deuxième roue dentée (18, 18', 18") selon sa position le long dudit axe (A),
**caractérisé en ce que** ladite au moins première roue dentée comprend une paire de premières roues dentées (17', 17") solidaires dudit carter (2) et une paire de deuxièmes roues dentées (18', 18'') portées en rotation libre à partir dudit moyeu (6),
ladite pluralité de satellites comprenant des premiers satellites (16') portés par des broches (19) solidaires de ladite portion (6a) et en rotation libre autour des premiers axes (B') desdites broches (19), lesdits premiers satellites (16') étant engrenés entre une première roue dentée de la première paire de roues dentées (17', 17'') et une deuxième roue dentée de la deuxième paire de roues dentées (18', 18") et des deuxièmes satellites (16") portés par des broches (19) solidaires de ladite portion (6a) et en rotation libre autour des deuxièmes axes (B") desdites broches (19), lesdits deuxièmes satellites (16") étant engrenés entre une première roue dentée de la deuxième paire de roues dentées (18', 18") et une deuxième roue dentée de la première paire de roues dentées (17', 17"),
ledit sélecteur (12) comprenant un arbre (23) coaxial par rapport audit arbre d'essieu (4, 5), ledit arbre (23) comprenant une première extrémité (23a) coopérant avec lesdits moyens d'actionnement (13) et une deuxième extrémité (23b) opposée à la première et définissant une denture (24), ladite denture (24) s'engrenant sélectivement avec une denture (26) solidaire de ladite portion (6a) dudit moyeu de roue (6) ou une denture (25') solidaire de ladite première roue dentée (18') de ladite deuxième paire de roues dentées ou une denture (25") solidaire de ladite deuxième roue dentée (18") de ladite deuxième paire de roues dentées selon sa position le long dudit axe (A).

2. Moyeu de roue selon la revendication 1, dans lequel lesdites première et deuxième roues dentées de ladite première paire de roues dentées (17', 17'') et lesdites première et deuxième roues dentées de ladite deuxième paire de roues dentées (18', 18'') se font face le long dudit axe (A).

3. Moyeu de roue selon la revendication 1 ou 2, dans lequel lesdites première et deuxième roues dentées de ladite deuxième paire de roues dentées (18', 18'') sont supportées librement en rotation par rapport audit axe (A) l'une sur l'autre sur ladite portion (6a) dudit moyeu de roue (6).

4. Moyeu de roue selon l'une des revendications 1 à 3, dans lequel lesdits axes (B', B'') desdites broches (19) portant lesdits premier et deuxième satellites (16', 16") sont parallèles l'un à l'autre.

5. Essieu (1) pour véhicule comportant :
- un carter (2) définissant un espace (3) le long d'un axe longitudinal (A) et comprenant une portion centrale (2a) et une paire de portions latérales (2b) reliées à la portion centrale le long dudit axe (A) ;
- une paire d'arbres d'essieu (4, 5) logés partiellement dans ledit espace (3) et comprenant des extrémités internes respectives coopérant avec un arbre d'entraînement configuré pour fournir un couple d'entraînement auxdits arbres d'essieu (4, 5) ;
- des moyeux de roue (6) respectifs portés en rotation libre à partir dudit carter (2) sur lesdites portions latérales (2b) selon l'une des revendications précédentes.

6. Essieu selon la revendication 5
comprenant une unité de division de couple entre ledit arbre d'entraînement et lesdits arbres d'essieu (4, 5).

7. Essieu selon la revendication 5 ou 6
dans lequel lesdits moyens d'actionnement (13) sont interposés radialement entre ledit arbre (5) et ledit carter (2) par rapport audit axe (A).

8. Essieu selon l'une des revendications 5 à 7, dans lequel lesdits moyens d'actionnement (13) comprennent un manchon (28) logé de manière coulissante avec ledit carter (2) entre une surface interne dudit carter (2) et ledit sélecteur (12), ledit manchon (28) étant couplé à la translation mais libre en rotation par rapport audit sélecteur (12), ledit carter (2) définissant un siège radial (29) dans lequel une bride (28a) dudit manchon (28) est configurée pour assurer une étanchéité coulissante divisant ledit siège radial en une première et une deuxième portion (29a, 29b), au moins une desdites première et deuxième portions (29a, 29b) comprenant des moyens de soupape (31) configurés pour introduire ou libérer de l'air sous pression et au moins une desdites première et deuxième portions (29a, 29b) comprenant des moyens élastiques (32) interposés de manière opérationnelle entre ledit carter (2) et ledit manchon (28).

9. Essieu selon la revendication 8, dans lequel lesdits moyens élastiques (32) comprennent un ressort hélicoïdal (33), ledit ressort hélicoïdal (33) définissant une pluralité de spires dont l'extension radiale varie d'une spire à l'autre de sorte qu'une bobine, lorsqu'elle est comprimée en paquet, soit logée radialement à l'intérieur de l'autre et que l'épaisseur dudit ressort hélicoïdal (33) en paquet soit égale à son fil.
